# EUROPÄISCHE PATENTSCHRIFT

(11) **EP 0 884 574 B1**
(45) Veröffentlichungstag und Bekanntmachung des Hinweises auf die Patenterteilung: **07.08.2002**
(21) Anmeldenummer: 98109673.8
(22) Anmeldetag: 27.05.1998
(51) Int. Cl.: G01M 17/02, G01M 1/02

(54) **Reifenprüfverfahren und -vorrichtung**
Device and procedure for testing tyres
Procédé et dispositif d'essai de pneus

(30) Priorität: 10.06.1997 DE 19724464
(43) Veröffentlichungstag der Anmeldung: 16.12.1998
(73) Patentinhaber: Beissbarth GmbH, 80993 München (DE)
(72) Erfinder: Bux, Hermann, 86559 Adelzhausen (DE); Kelm-Kläger, Ronald, 80993 München (DE)
(74) Vertreter: Kirschner, Klaus Dieter, Dipl.-Phys.

(56) Entgegenhaltungen:
- DE-A- 4 101 921
- DE-A- 4 231 578

## Beschreibung

Die Erfindung betrifft ein Reifenprüfverfahren, bei dem vor und nach einer Änderung im Reifendruck mit kohärenter Strahlung jeweils ein Interferogramm einer Reifenoberfläche erzeugt und das Interferogramm in einem Modulo-2π-Bild umgesetzt wird, das seinerseits zu einem Grauwertbild verarbeitet wird, und bei dem aus einem Vergleich der Grauwertbilder die Informationen über vorhandene Defekte des Reifens gewonnen werden, sowie eine Vorrichtung zur Durchführung des Verfahrens.

Aus der DE 42 31 578 A1 ist ein Verfahren zur Ermittlung der Strukturfestigkeit von Reifen bekannt, bei dem der Reifen mit kohärentem Licht beleuchtet wird, die vom Reifen zurückgestreute Strahlung in einem Zweistrahlinterferometer in zwei Teilstrahlen aufgeteilt wird, in dem Zweistrahlinterferometer eine der beiden Teilstrahlungen gegen die andere Teilstrahlung verkippt wird (Shearing), in dem Zweistrahlinterferometer eine der beiden Teilstrahlungen schrittweise phasenverschoben wird, die von dem Prüfobjekt zurückgestreute und in dem Zweistrahlinterferometer in die zwei Teilstrahlungen aufgeteilte und wieder zusammengeführte Strahlung durch die Oberfläche des Reifens abbildende Komponenten mit großer Öffnung einem elektronischen Bildsensorsystem zugeführt wird und die von dem Bildsensorsystem abgegebenen Signale digitalisiert und in einem Bildverarbeitungssystem zu einem Modulo-2π-Bild weiterverarbeitet werden und das Modulo-2π-Bild zu einem Ausgangs-Grauwertbild bestätigt wird.

Gemäß der DE 195 02 073 A1 wird das oben erwähnte Verfahren dadurch weitergebildet, daß das Ausgangs-Grauwertbild in der Weise partiell differenziert wird, daß ein zweites dem Ausgangs-Grauwertbild gleiches Grauwertbild erzeugt wird und dieses gegen das Ausgangs-Grauwertbild in Shearing-Richtung geometrisch verschoben und um einen über den gesamten Bildbereich konstanten Grauwert verändert wird und das so manipulierte Zweit-Grauwertbild von dem Ausgangs-Grauwertbild subtrahiert wird, und damit ein resultierendes Grauwertbild entsteht, an dem gegebenenfalls vorhandene Defekte eines Reifens erkennbar sind.

Wenn man bedenkt, daß Strukturschäden in den Reifen, insbesondere in der Karkasse einschließlich Gürtel, bei PKW-Reifen die Fahrsicherheit des Kraftfahrzeuges wesentlich beeinträchtigen können, ist es wünschenswert eine Reifenprüfung in regelmäßigen Abständen durchzuführen.

Der Erfindung liegt die Aufgabe zugrunde, eine Reifenprüfverfahren und eine -Vorrichtung zu schaffen, die eine Reifenprüfung im Rahmen von Wartungsarbeiten an den Rädern eines KfZs gestattet, die von Zeit zu Zeit durchgeführt werden müssen.

Zu diesem Zweck sieht das erfindungsgemäße Verfahren vor, daß zur Prüfung eines Reifens das Rad, das den zu prüfenden Reifen aufweist, auf einer motorisch angetriebenen Wuchtmaschine montiert wird, daß ein an der Wuchtmaschine angeordneter Prüfkopf zur Aufnahme der Interferogramme an den Reifen bis auf einen vorgegebenen Abstand herangefahren wird, daß die Überprüfung auf Defekte auf einem ersten Prüfsegment des Reifens vorgenommen wird, daß das Rad durch den Motor der Wuchtmaschine um den Betrag eines Prüfsegmentes weitergedreht wird, und daß die beiden letztgenannten Schritt wiederholt werden, bis der gesamte Reifen geprüft ist.

Die Kosten für den Prüfkopf hängen wesentlich von der Fläche ab, die mit einem Meßgang erfaßt werden kann. Daher ist an dem erfindungsgemäßen Verfahren vorteilhaft, daß die Kosten für den Prüfkopf wesentlich dadurch gesenkt werden, daß eine segmentweise Abtastung des Reifens vorgesehen ist, in dem mehrere Prüfsegmente des Reifens nacheinander in das Blickfeld des Prüfkopfes gebracht werden. Es wäre möglich, das Rad von Hand inkrementartig beziehungsweise schrittweise zu drehen. Dies würde sicherlich die Kosten zur Anpassung der Wuchtmaschine für diesen speziellen Zweck minimieren. Eine andere Alternative besteht darin, die Welle der Wuchtmaschine mit einem separaten kleinen Elektromotor um geeignete Beträge entsprechend der Größe des Prüfsegmentes zu drehen. Dies würde im wesentlichen zusätzliche Hardwarekosten für den Motor und dessen Steuerung mit sich bringen. Erfindungsgemäß wird der Motor der Wuchtmaschine nicht lediglich zum Drehen des Rades während dem Wuchtverfahren verwendet, sondern ebenfalls zum schrittweisen Drehen des Rades während dem Reifenprüfverfahren. Das Problem dieser Lösung besteht darin, daß der Motor der Wuchtmaschine normalerweise als ein starker Motor ausgelegt ist, um ein ausreichende Geschwindigkeit für das Rad zum Durchführen des Wuchtverfahrens bereitstellen. Bei dem Auswuchtverfahren wird das Rad auf eine spezifische Maximalgeschwindigkeit angetrieben, wonach der Motor gestoppt und es dem Rad ermöglicht wird, auszulaufen, wobei das Rad alternativ auch abgebremst werden kann. Die für solch ein Verfahren nötige Motorsteuerung ist weder zum Drehen des Rades an der Wuchtmaschine bei niedriger Geschwindigkeit noch zur Steuerung der inkrementartigen beziehungsweise schrittweisen Drehung ausgelegt. Somit sind ein angepaßtes Motorsteuerverfahren und -vorrichtung erforderlich, um die Wuchtmaschine gemäß dem Stand der Technik auf den vorliegenden Zweck anzupassen. Anders ausgedrückt müssen beim Kombininieren der aus der DE 4 231 578 A1 bekannten Reifenprüfvorrichtung mit einer Wuchtmaschine gemäß dem Stand der Technik in eine einzelne Vorrichtung gewisse Veränderungen und Vorkehrungen getroffen werden, um eine solche Kombination zu ermöglichen. Trotz der speziell erforderlichen Motorsteuerung für die Maschine verfügt eine Kombinationsvorrichtung gemäß der vorliegenden Erfindung bestimmte Vorteile gegenüber dem Stand der Technik bezüglich Kosten und Leistung.

Bei einer vorteilhaften Ausgestaltung der Erfindung wird der Antriebsmotor der Wuchtmaschine durch einen Rechner über einen Frequenzumrichter betrieben, und insbesondere wird die Weiterdrehung des Rades abgetastet und in den Rechner eingegeben. Damit wird sichergestellt, daß das Rad zuverlässig immer genau um den erforderlichen Betrag weitergedreht werden kann, ohne den Bauaufwand unnötig zu erhöhen.

Gemäß einer vorteilhaften Ausgestaltung des Verfahrens werden die für die Weiterdrehung des Rades erforderlichen Größen, beispielsweise die Reifengröße, in den Rechner eingegeben oder aus einer Tabelle im Rechner abgerufen werden. Wenn die Größen in Form einer Tabelle abgelegt werden, kann diese Tabelle durch die Handeingaben laufend ergänzt werden, so daß in vorteilhafter Weise der Aufwand bei dem Einrichten für eine Prüfung immer weniger wird.

Eine weitere vorteilhafte Ausgestaltung des erfindungsgemäßen Verfahrens ist dadurch gekennzeichnet, daß der Prüfkopf in den X- und Y-Richtungen bewegt wird, um denselben für unterschiedlich große Reifen in Position zu bringen. Durch solch ein Bewegungsschemata kann der Prüfkopf einfach und ohne weitere Mittel an der korrekten Prüfposition angeordnet werden.

Eine weitere vorteilhafte Ausgestaltung des erfindungsgemäßen Verfahrens ist dadurch gekennzeichnet, daß bei dem Anfahren des Prüfkopfes dessen Abstand zum Reifen überwacht und eine Anzeige gegeben wird, wenn der Prüfkopf den Sollabstand erreicht hat, und daß der Prüfkopf dann arretiert wird. Damit ist eine sichere, schnelle und genaue Einstellung des Prüfkopfes auf den Reifen möglich.

Eine weitere vorteilhafte Ausgestaltung des erfindungsgemäßen Verfahrens ist dadurch gekennzeichnet, daß der Reifendruck für jeden Prüfschritt reduziert wird, wobei nach dem Beenden des Prüfens dieser auf den Nominal- oder Nenndruck zurückgeführt wird. Mittels diesem Verfahren kann die Veränderung des Reifendruckes während eines gesamten Prüfzyklus, bei welchem die Prüfsektoren nacheinander gemessen werden, bei minimalem Zeitverlust durchgeführt werden, da die Druckveränderung von dem ersten Prüfschritt zu einem zweiten Prüfschritt bei dem Enddruck beginnt, welcher an dem Ende des ersten Prüfschrittes vorliegt. Desweiteren muß nach jeder Druckveränderung der Reifen für eine gewisse Zeit ruhen, sodaß die Prüfergebnisse nicht durch fortlaufende Bewegungen beeinflußt werden, die durch die Druckveränderung bedingt sind. Daher wird die erforderliche Zeit für solch eine Wiederherstellungs- oder Ruhezeit minimiert, wenn die Anzahl an während einem Prüfzyklus erfolgenden Druckveränderungen auf ein Minimum gebracht wird. Die Anzahl an Wiederherstellungs- beziehungsweise Ruhezeitperioden würde ansteigen, wenn der Reifendruck nach jedem Reifenprüfschritt bezüglich eines spezifischen Abschnittes des Reifens auf Nominaldruck gebracht würde.

Die erfindungsgemäße Reifenprüfvorrichtung weist eine Luftdruckeinrichtung zur Änderung des Reifendrucks sowie einen Prüfkopf und einen Rechner auf, die vor und nach einer Änderung im Luftdruck mit kohärenter Strahlung jeweils ein Interferogramm der Reifenoberfläche erzeugen und das Interferogramm in ein Modulo-2π-Bild umsetzen, das einerseits zu einem Grauwertbild verarbeitet wird, und in denen aus einem Vergleich der Grauwertbilder die Informationen über vorhandene Defekte des Reifens gewonnen werden, und die Vorrichtung ist gekennzeichnet durch eine Wuchtmaschine auf die das Rad, das den zu prüfenden Reifen aufweist, montierbar ist, eine Positionierungseinrichtung für den Prüfkopf, mit der der Prüfkopf zur Aufnahme der Interferogramme an den Reifen bis auf einen vorgegebenen Abstand heranzufahren ist, und durch eine Steuereinrichtung für die Wuchtmaschine, um das Rad um den Betrag eines Prüfsegmentes weiterzudrehen, wenn die Prüfung des vorhergehenden Prüfsegmentes abgeschlossen ist.

Eine vorteilhafte Ausführungsform der erfindungsgemäßen Reifenprüfvorrichtung ist dadurch gekennzeichnet, daß der Motor der Wuchtmaschine mittels eines Frequenzwandlers beziehungsweise -umrichters betrieben wird, welcher von einem Computer steuerbar ist. Dies ist eine besonders zuverlässige Weise, den Motor der Wuchtmaschine derart zu steuern, daß das Rad bei einer niedrigen Geschwindigkeit während dem Reifenprüfverfahren schrittweise beziehungsweise inkrementartig bewegt wird.

Eine vorteilhafte Ausführungsform der Reifenprüfvorrichtung gemäß der Erfindung ist dadurch gekennzeichnet, daß ein Drehmelder beziehungsweise eine Synchronisiereinrichtung beziehungsweise ein Synchronisationsring mit der Welle der Wuchtmaschine verbunden ist, der eine inkrementartige Drehung der Welle erfaßt beziehungsweise abtastet und ein entsprechendes Signal an den Computer liefert, welcher den Motorantrieb ausschaltet, wenn das Rad schrittweise um ein weiteres Prüfsegment gedreht wurde. Durch Verwendung dieser Anordnung kann eine Rückkopplung bezüglich der schrittweisen beziehungsweise inkrementartigen Bewegung des Rades erzeugt werden, die zur exakten Steuerung der schrittartigen Bewegung des Rades an der Wuchtmaschine verwendet werden kann.

Eine vorteilhafte Ausführungsform der erfindungsgemäßen Reifenprüfvorrichtung dadurch gekennzeichnet, daß der Computer einen Speicher umfaßt, in welchem eine Tabelle vorgesehen ist, die Größendaten enthält, wie sie nötig sind, zur schrittartigen Drehung eines Rades in einer Weise, die von der Größe des Rades abhängt. Der Speicher in dem Computer stellt sicher, daß möglichst wenig Fachwissen nötig ist, um die Maschine zu betreiben.

Eine vorteilhafte Ausführungsform der Reifenprüfvorrichtung gemäß der Erfindung ist dadurch gekennzeichnet, daß die Positioniereinrichtung einen X-Schlitten zur Verschiebung des Prüfkopfes parallel bezüglich der Achse der Welle und einen Y-Schlitten zur Verschiebung des Prüfkopfes senkrecht zu der Achse der Welle aufweist, und daß die Schlitten und der Prüfkopf in einem Gehäuse an der Wuchtmaschine integriert sind. Diese Ausführungsform der Erfindung hat den Vorteil, daß das eingenommene Volumen der Maschine minimiert ist, und daß der Prüfkopf in gewisser Weise innerhalb des Gehäuses der Wuchtmaschine geschützt ist, was ein deutlicher Vorteil ist angesichts der rauhen Umgebung, die in Automobilwerkstätten vorliegt, wo solche Maschine verwendet werden.

Eine vorteilhafte Ausführungsform der erfindungsgemäßen Reifenprüfvorrichtung ist dadurch gekennzeichnet, daß der X-Schlitten und der Y-Schlitten durch Motoren unter der Steuerung eines Computers verfahrbar sind. Somit ist die Positionierung des Prüfkopfes automatisiert und kann automatisch erfolgen, ohne spezifische Fachkenntnis oder Befähigung desjenigen, der die Maschine betreibt.

Eine vorteilhafte Ausführungsform der Reifenprüfvorrichtung gemäß der Erfindung ist dadurch gekennzeichnet, daß die Positioniereinrichtung zwei Schwenkarme umfaßt, die an der Wuchtmaschine vorgesehen sind oder dadurch, daß die Positioniereinrichtung eine Stütze an dem Prüfkopf umfaßt. Bevorzugt kann die Positioniereinrichtung oder alternativ die Stütze arretiert werden, wenn der Prüfkopf die Prüfposition erreicht hat. Diese Ausführungsformen bilden mechanische Mittel zum Stützen des Prüfkopfes und zum Einstellen der Entfernung beziehungsweise des Abstandes zwischen dem Reifen und dem Prüfkopf, wobei mechanische Mittel höchst zuverlässig und einfach zu betätigen sind.

Eine vorteilhafte Ausführungsform der erfindungsgemäßen Reifenprüfvorrichtung ist gekennzeichnet durch eine Abstandseinstelleinrichtung zum Einstellen des Abstandes zwischen dem Prüfkopf und dem Reifen. Bevorzugt umfaßt die Abstandseinstelleinrichtung zwei schräge beziehungsweise schräg eingestellte Dioden an dem Ende des Prüfkopfes, wobei sich Strahlen von solchen Dioden bei der Prüfentfernung beziehungsweise dem Prüfabstand schneiden. Diese Abstands-einstelleinrichtung ermöglicht das Einstellen des Abstandes durch optische Mittel, ohne den Reifen zu berühren. Die Abstandseinstelleinrichtung kann einfach betätigt werden.

Eine vorteilhafte Ausführungsform der Reifenprüfvorrichtung gemäß der Erfindung ist dadurch gekennzeichnet, daß die Abstands-einstelleinrichtung einen mechanischen Taster an dem Prüfkopf umfaßt, welcher Taster beim Erreichen des Prüfabstandes den Reifen berührt. Dies ist eine mechanische Version der Abstandseinstelleinrichtung, welche einfach angepaßt ist, auf die rauhe Umgebung.

Eine vorteilhafte Ausführungsform der erfindungsgemäßen Reifenprüfvorrichtung ist dadurch gekennzeichnet, daß die Abstandseinstelleinrichtung eine Ultraschallentfernungsmeßeinrichtung umfaßt. Diese Abstandseinstelleinrichtung ist eine weitere Einrichtung, die keine Berührung des Reifens erfordert, was ebenfalls vorteilhaft ist, wenn die betroffene Fläche ein gewisses Profil aufweist.

Eine vorteilhafte Ausführungsform der erfindungsgemäßen Reifenprüfvorrichtung ist gekennzeichnet durch ein Ventil, welches sowohl bezüglich der Größe seiner Öffnung als auch bezüglich der Öffnungszeit steuerbar ist. Solch ein Ventil ermöglicht eine schnelle und automatische Einstellung des Reifendruckes unter der Steuerung eines Computers, welcher lediglich die Größe der Ventilöffnung und die Öffnungszeit des Ventiles steuert. Dies bedeutet ebenfalls einen Vorteil bezüglich der Minimierung an erforderlicher Zeit zum Durchführen eines vollständigen Prüfzyklus.

Eine vorteilhafte Ausführungsform der Reifenprüfvorrichtung gemäß der Erfindung ist gekennzeichnet durch eine Haupt- beziehungsweise zentrale Steuereinrichtung zum Steuern des Luftdruckes in dem Reifen, wobei der Druck in dem Reifen für jeden Prüfschritt um eine Stufe zu reduzieren ist und bei Beendigung einer Prüfung auf Nominaldruck zurückgeführt werden muß. Wie bereits oben erwähnt, minimiert dies die erforderliche Zeit zum Durchführen eines vollständigen Prüfverfahrenszyklus.

Eine vorteilhafte Ausführungsform der erfindungsgemäßen Reifenprüfvorrichtung ist gekennzeichnet durch eine Haupt- beziehungsweise zentrale Rechnungseinrichtung zur Steuerung der Funktionen an der Reifenprüfvorrichtung, wobei die Recheneinrichtung bevorzugt integriert ist in der Recheneinrichtung für die Wuchtmaschine. Durch Kombinieren der Recheneinrichtung der Prüfvorrichtung mit der Recheneinrichtung der Wuchtmaschine können einige Einsparungen erzielt werden mit Bezug auf die Hardwareanforderung, wodurch die Kosten reduziert und die Zuverlässigkeit verbessert sind.

Eine vorteilhafte Ausführungsform der erfindungsgemäßen Reifenprüfvorrichtung ist gekennzeichnet durch einen Monitor beziehungsweise eine Anzeige zum Darstellen beziehungsweise Anzeigen der Ergebnisse der Prüfung oder Messung, und welcher ebenfalls dazu dient, Informationen anzuzeigen, während dem Wuchten beziehungsweise Auswuchten des Rades. Durch diese weitere gemeinsame Hardwarenutzung können weitere Kostenreduzierungen erzielt werden.

Vorteilhafte Ausgestaltungen der Erfindung sind in den weiteren Unteransprüchen gekennzeichnet.

Ausführungsbeispiele der Erfindung werden nun anhand der beiliegenden Zeichnungen beschrieben. Es zeigen:
Figur 1 schematisch in Draufsicht eine Reifenprüfvorrichtung gemäß einem ersten Ausführungsbeispiel der Erfindung unter Verwendung einer Wuchtmaschine;
Figur 2 eine schematische Seitenansicht einer Reifenprüfvorrichtung gemäß einem zweiten Ausführungsbeispiel der Erfindung unter Verwendung einer Wuchtmaschine;
Figur 3 eine Draufsicht auf die Vorderseite des Prüfkopfes; und
Figur 4 eine teilweise, schematische Draufsicht auf ein weiteres Ausführungsbeispiel der erfindungsgemäßen Reifenprüfvorrichtung.

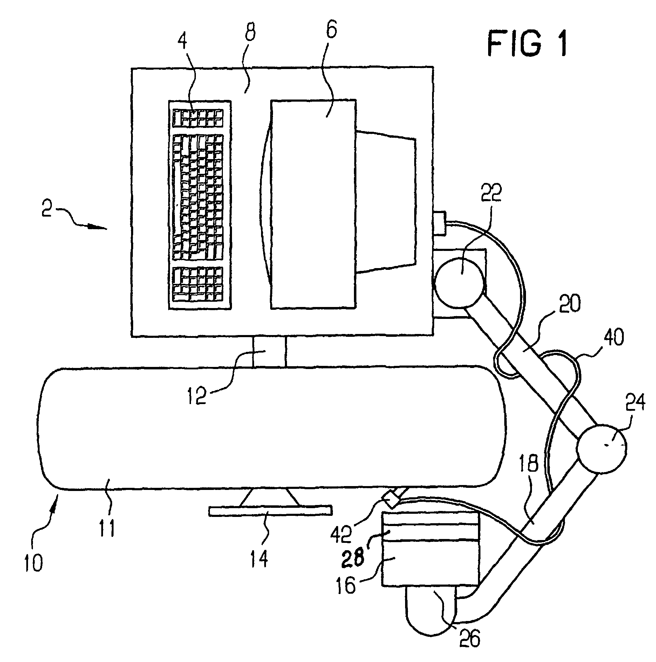

Unter Bezugnahme auf die Figur 1 wird nun ein erstes Ausführungsbeispiel der erfindungsgemäßen Reifenprüfvorrichtung beschrieben.

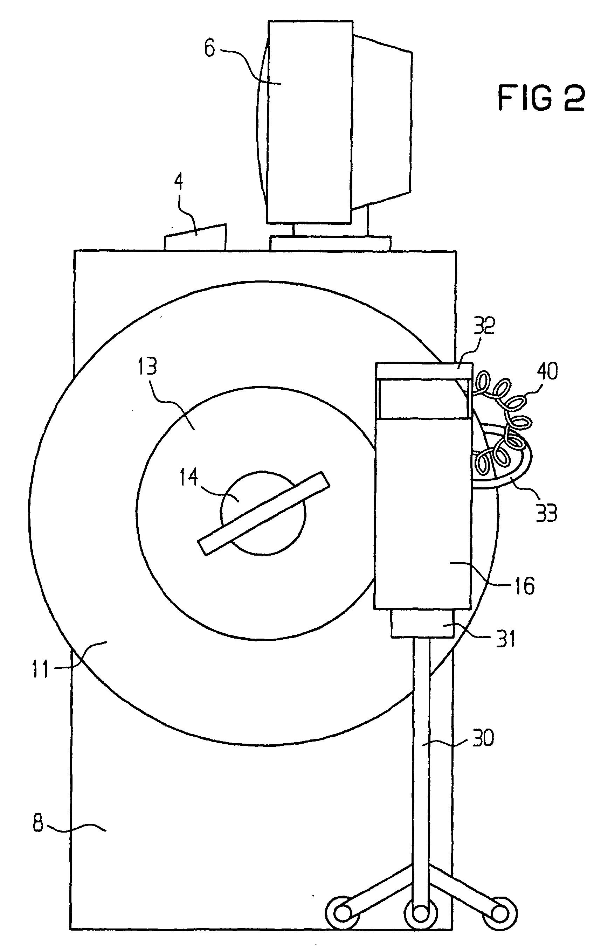

Figur 1 zeigt eine Wuchtmaschine 2 mit einer Tastatur 4 und einem Monitor 6, die auf einem Gehäuse 8 angeordnet sind. Ein Rad 10 mit einem Reifen 11 ist auf einer Welle 12 der Wuchtmaschine 2 durch eine Schnellspannvorrichtung 14 montiert,die an einer Felge 13 (Fig. 2) des Rades 10 angreift.

An dem Gehäuse 8 der Wuchtmaschine 2 ist ein Prüfkopf 16 über zwei Parallelführungen oder Arme 18, 20 befestigt. Der Arm 20 ist an seinem einem Ende auf einer Konsole 22 an dem Gehäuse 8 schwenkbar gelagert. Ein Gelenk 24 verbindet den Arm 20 mit dem Arm 18, und der Arm 18 ist über ein Gelenk 26 an dem Prüfkopf 16 befestigt. Damit kann der Prüfkopf 16 von einer Position (nicht gezeigt), in der er an dem Gehäuse 8 verstaut ist, in eine Prüfposition (Figur 1) geschwenkt werden, in der er der Seitenwand des Reifens 11 in Prüfposition gegenüberliegt. An dem Prüfkopf 16 ist ein Handgriff 28 vorgesehen, der einen Druckschalter (nicht gezeigt) aufweist, über den die Positioniereinrichtung (Parallelführungen oder Arme 18, 20) arretiert werden können, wenn der Prüfkopf 16 die Prüfposition erreicht hat.

Figur 2 zeigt eine zweite Ausführungsform der Erfindung in Seitenansicht, wobei gleiche Teile wie in Figur 1 die gleichen Bezugszeichen tragen. Zur Unterstützung des Prüfkopfes 16 ist eine Stütze 30 vorgesehen, mit der der Prüfkopf 16 auf der Höhe der Welle der Wuchtmaschine 2 gehalten wird. Wenn sich der Prüfkopf 16 in Prüfposition befindet, kann die Stütze 30 in dieser Position arretiert werden, um sicherzustellen, daß der Prüfkopf 16 in Prüfposition bleibt. Der Prüfkopf 16 kann mit Hilfe eines Handgriffes 32 in Position gebracht werden. Die Arretierung kann über einen Druckschalter (nicht gezeigt) aktiviert werden, der an dem Griff 32 vorgesehen ist. Eine Leitung 33 dient dazu, den Prüfkopf mit Strom zu versogen und die Signale zu der zentralen Recheneinheit zuzuführen.

In dem Gehäuse 8 (Figuren 1 und 2) ist auch eine Steuereinrichtung (nicht gezeigt) vorgesehen, die die Steuerung für eine Luftdruckeinrichtung umfaßt, die einen Druckschlauch 40 und ein Ventil 42 umfaßt, welches auf das Einlaßventil des Reifens aufsetzbar ist. Das Ventil 42 ist sowohl bezüglich seiner Öffnung (Abgabemenge pro Zeiteinheit) als auch zum Öffnen und Schließen steuerbar, so daß die Druckänderung im Reifen sowohl über die Ventilöffnung als auch über die Zeitdauer steuerbar ist, in der Ventil geöffnet ist.

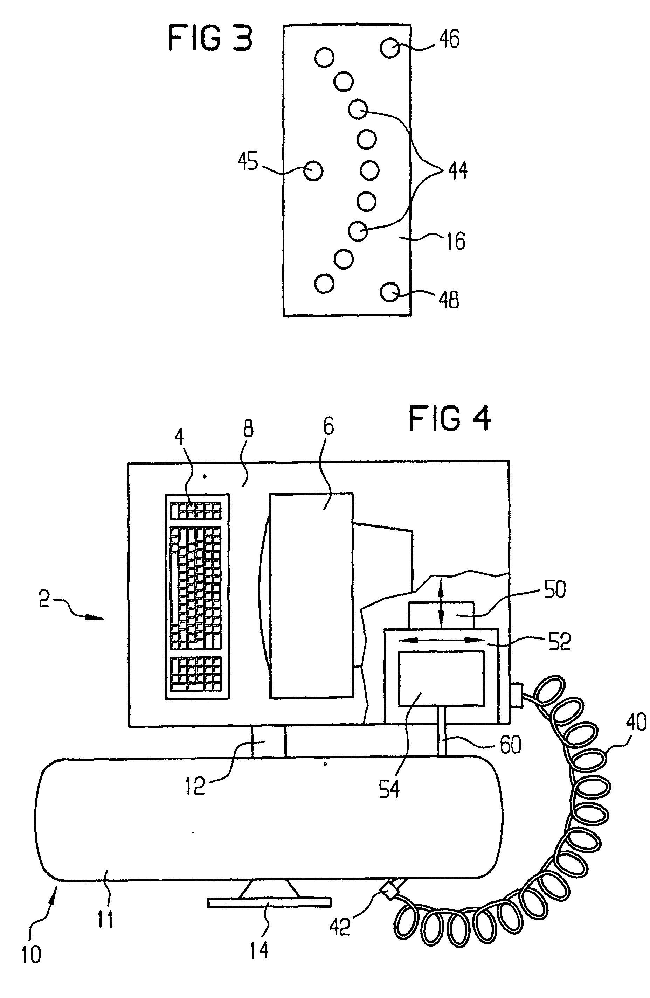

Der Prüfkopf 16 ist in Figur 3 in Frontansicht dargestellt, und es sind Laserdioden 44 zu erkennen, die zur Erfassung der Interferogramme dienen. Ferner sind zwei Dioden 46, 48 vorgesehen, die dazu dienen, den Prüfabstand zwischen dem Prüfkopf 16 und der Seitenwand des Reifens 11 einzustellen. Dazu sind die beiden Laserdioden 46, 48 im sichtbaren Bereich derart schräggestellt, daß ihre Laserstrahlen einen Winkel zueinander bilden und sich an der Stelle kreuzen, die dem Prüfabstand zwischen Prüfkopf und Reifenseitenfläche entspricht. Wenn der Prüfkopf 16 zu dem Reifen 11 hin bewegt wird, ist der Prüfabstand dann erreicht, wenn die beiden Laserstrahlen auf der Seitenwand des Reifens 11 einen Punkt bilden. Schließlich ist noch ein Objektiv 45 einer Kamera schematisch dargestellt, die die Bilder von dem zu prüfenden Reifen aufnimmt.

Die Drehzahl des Motors (nicht gezeigt) der Wuchtmaschine wird über steuerbar Frequenzumrichter (nicht gezeigt) von der zentralen Recheneinheit derart gesteuert, daß er eine relativ geringe, konstante Drehzahl aufweist. Ein Drehmelder an der Welle 12 tastet die Welle ab und erzeugt ein Ausgangssignal, welches dem Betrag entspricht, um den der Reifen gedreht worden ist. Das Ausgangssignal des Drehmelders wird in dem Rechner dazu verwendet, um den Antriebsmotor abzuschalten, wenn der Reifen um ein Prüfsegment weitergedreht worden ist. Bei dem in Figur 3 gezeigten Ausführungsbeispiel ist ein Prüfsegment 1/8 des Gesamtumfanges des Reifens, so daß der Reifen siebenmal weitergedreht werden muß, um den Reifen insgesamt zu überprüfen.

Mit der Steuerungseinrichtung und dem Prüfkopf sind Zuleitungen für Druckluft, für die Stromversorgung des Prüfkopfes und eine Datenleitung zu der Recheneinheit verbunden. Auch der Motor zum Antrieb der Welle der Wuchtmaschine und der Drehmelder an der Welle der Wuchtmaschine sind mit der Recheneinheit verbunden, wobei diese Verbindungsleitungen und die Recheneinheit zur Vereinfachung nicht dargestellt sind.

In Figur 4 ist ein weiteres Ausführungsbeispiel der erfindungsgemäßen Reifenprüfvorrichtung dargestellt, wobei gleiche Teile wie in den Figuren 1 bis 3 die gleichen Bezugszeichen aufweisen.

In Figur 4 ist eine X-Y-Positionierungseinrichtung mit einem X-Schlitten 50 und einem Y-Schlitten 52 sowie ein Prüfkopf 54 dargestellt. Der X-Schlitten 50 dient zur Einstellung des Abstandes zwischen dem Prüfkopf 54 und der Seitenfläche des Reifens 11. Bei dem gezeigten Ausführungsbeispiel liegt die X-Richtung des X-Schlittens 50 parallel zu der Welle 12 und die Y-Richtung des Y-Schlittens 52 senkrecht zu der Welle 12.

Der X-Schlitten 50 und der Y-Schlitten 52 sind über Linearlager mit Wellenführungen gelagert. Der X-Schlitten 50 und der Y-Schlitten 52 sind jeweils mit Arretierungseinrichtungen (nicht gezeigt) versehen, die ein Arretieren der Schlitten in einer Prüfposition gestatten, in der der Prüfkopf 54 sich in der Position befindet, in der die Reifenprüfung durchgeführt wird.

Bei dem Ausführungsbeispiel von Figur 4 ist die Abstandsbestimmung zwischen dem Prüfkopf 54 und der Seitenwand des Reifens 11 durch einen Taster 60 verwirklicht, der im oberen Bereich des Prüfkopfes 54 bis auf Prüfabstand ausfahrbar ist. Wenn der Prüfkopf 54 mit den Schlitten 50, 52 in Prüfposition gebracht worden ist, greift der Taster 60 an der Innenwand des Reifes 11 an. Daraufhin wird der Prüfkopf arretiert und der Taster 60 zurückgezogen.

Bei diesem Ausführungsbeispiel werden in vorteilhafter Weise die Schlitten 50, 52 durch Motoren (nicht gezeigt) unter Steuerung des Rechners angetrieben. In diesem Fall kann ein Ausgangssignal von dem Taster 60 an den Rechner gegeben werden, wenn die Prüfposition erreicht ist.

Bei allen Ausführungsbeispielen ist eine zentrale Recheneinrichtung zur Steuerung der Funktionen der Reifenprüfvorrichtung vorgesehen, wobei diese Recheneinrichtung mit dem Rechner der Wuchtmaschine integriert ist, so daß auch hier Hardware-Aufwand eingespart wird. Auch der Monitor zur Anzeige der Meßergebnisse wird für das Wuchten und für die Reifenprüfung gleichermaßen verwendet, indem die Informationen über die beiden Prüfverfahren auf demselben Monitor angezeigt werden.

Die Funktionsweise der Reifenprüfvorrichtung ist wie folgt.

Zunächst wird das Rad, das den zu prüfenden Reifen aufweist, auf einer Wuchtmaschine montiert, wobei die Welle der Wuchtmaschine unter der Steuerung eines Rechners sowohl zur Auswuchtung des Rades als auch zur Durchführung der Reifenprüfung mit unterschiedlichen Drehzahlen angetrieben werden können.

Als nächstes wird ein Prüfkopf zur Aufnahme der Interferogramme an den Reifen bis auf einen vorgegebenen Prüfabstand herangefahren und in dieser Position arretiert.

Nach der Montage des Reifens an der Wuchtmaschine wird das Luftdruckventil an den Reifen angeschlossen.

Vor der Durchführung der ersten Prüfsequenz werden die radspezifischen Daten beziehungsweise die für die Weiterschaltung der Welle der Wuchtmaschine erforderlichen Größen, beispielsweise die Dauer des Antriebs bei konstanter Drehzahl, die von den Radabmessungen abhängen, in den Rechner eingegeben beziehungsweise von einer Tabelle abgerufen.

Sodann wird die Reifenprüfung auf einem ersten Prüfsegment des Reifens nach dem eingangs genannten Verfahren durchgeführt. Nachdem das erste Prüfsegment überprüft ist, wird das Rad durch die Welle der Wuchtmaschine um den Betrag eines Prüfsegmentes weitergedreht, wobei die Welle der Wuchtmaschine über einen Rechner und in Abhängigkeit von Ausgangssignalen eines Drehmelders an der Welle der Wuchtmaschine gesteuert werden. Wenn das Rad mit den nächsten Prüfsegment in Position gebracht ist, wird der Prüfkopf aktiviert, um das neue Meßsegment zu überprüfen.

Danach werden so viele Prüfsequenzen und Weiterschaltungen der Räder durchgeführt, bis der gesamte Reifen überprüft ist. Bei jeder Prüfsequenz wird, wie bereits erwähnt, zwischen einer ersten Serie von Interferogrammen und einer zweiten Serie eine Druckabsenkung durchgeführt, die ebenfalls von der Recheneinrichtung gesteuert ist. Die Druckabsenkung erfolgt somit in Stufen, wobei der Druck ausgehend vom Nenndruck bei jeder Prüfsequenz um eine Stufe herabgesetzt wird. Nach abgeschlossener Prüfung wird dann der Luftdruck im Reifen wieder auf den Nenndruck gebracht, wobei ebenfalls das Ventil und die angeschlossene Steuereinrichtung benutzt werden.

Die Erfindung ist nicht auf die beschriebenen Ausführungsbeispiele beschränkt. So kann beispielsweise die Einstellung des Abstandes zwischen dem Prüfkopf und der Seitenfläche des Reifens nicht nur auf optischem Wege (Figur 1) oder auf mechanischem Wege (Figur 4), sondern auch durch eine Ultraschall-Entfernungsmeßeinrichtung erfolgen.

## Patentansprüche

1. Reifenprüfverfahren, bei dem vor und nach einer Änderung im Reifendruck mit kohärenter Strahlung jeweils ein Interferogramm der Reifenoberfläche erzeugt und das Interferogramm in eine Modulo-2π-Bild umgesetzt wird, das seinerseits zu einem Grauwertbild verarbeitet wird und bei dem aus einem Vergleich der Grauwertbilder die Informationen über vorhandene Defekte des Reifens gewonnen werden, **dadurch gekennzeichnet, daß**
(a) zur Prüfung eines Reifens das Rad, das den zu prüfenden Reifen aufweist, auf einer Wuchtmaschine montiert wird , daß
(b) ein an der Wuchtmaschine angeordneter Prüfkopf zur Aufnahme der Interferogramme an den Reifen bis auf einen vorgegebenen Prüfabstand herangefahren wird, daß
(c) auf einem ersten Prüfsegment des Reifens die Überprüfung auf Defekte vorgenommen wird, daß
(d) das Rad durch die Wuchtmaschine um den Betrag eines Prüfsegmentes weitergedreht wird, und daß
(f) die Schritte (c) und (d) wiederholt werden, bis der gesamte Reifen überprüft ist.

2. Verfahren nach Anspruch 1, **dadurch gekennzeichnet, daß** der Antriebsmotor der Wuchtmaschine durch einen Rechner über einen steuerbaren Frequenzumrichter betrieben wird.

3. Verfahren nach Anspruch 2, **dadurch gekennzeichnet, daß** die Weiterdrehung des Motors abgetastet und in den Rechner eingegeben wird.

4. Verfahren nach Anspruch 3, **dadurch gekennzeichnet, daß** die für die Weiterdrehung des Rades erforderlichen Größen , beispielsweise die Reifengröße, in den Rechner eingegeben oder aus einer Tabelle im Rechner abgerufen werden.

5. Verfahren nach Anspruch 1, **dadurch gekennzeichnet, daß** der Meßkopf in X- und Y- Richtung verfahren wird, um ihn bei unterschiedlichen Reifen in Prüfposition zu bringen.

6. Verfahren nach Anspruch 1, **dadurch gekennzeichnet, daß** beim Anfahren des Prüfkopfes dessen Abstand zum Reifen überwacht und eine Anzeige gegeben wird, wenn der Prüfkopf die Prüfposition erreicht hat, und daß der Prüfkopf dann arretiert wird.

7. Verfahren nach Anspruch 1, **dadurch gekennzeichnet, daß** der Reifendruck bei jedem Prüfschritt um eine Stufe herabgesetzt und nach abgeschlossener Prüfung wieder auf den Nenndruck gebracht wird.

8. Reifenprüfvorrichtung zur Durchführung des Verfahrens nach Anspruch 1, mit einer Luftdruckeinrichtung zur Änderung des Reifendrucks sowie einem Prüfkopf und einem Rechner, die vor und nach einer Änderung im Luftdruck mit kohärenter Strahlung jeweils ein Interferogramm der Reifenoberfläche erzeugen und das Interferogramm in ein Modulo-2π-Bild umsetzen, das einerseits zu einem Grauwertbild verarbeitet wird, und in denen aus einem Vergleich der Grauwertbilder die Informationen über vorhandene Defekte des Reifens gewonnen werden, **gekennzeichnet durch** eine Wuchtmaschine (2), auf der das Rad, das den zu prüfenden Reifen aufweist, montierbar ist, eine Positionierungseinrichtung (18, 20; 50, 52) für einen Prüfkopf (16, 54), mit der der Prüfkopf zur Aufnahme der Interferogramme an den Reifen (11) bis auf einen vorgegebenen Abstand heranzufahren ist, und **durch** eine Steuereinrichtung für die Wuchtmaschine (2), um das Rad um den Betrag eines Prüfsegmentes weiterzudrehen, wenn die Prüfung des vorhergehenden Prüfsegmentes abgeschlossen ist.

9. Vorrichtung nach Anspruch 8, **dadurch gekennzeichnet, daß** der Motor der Wuchtmaschine (2) über eine Frequenzumrichter betrieben ist, der von einem Rechner steuerbar ist.

10. Vorrichtung nach Anspruch 9, **dadurch gekennzeichnet, daß** ein Drehmelder mit der Welle der Wuchtmaschine verbunden ist, der die Weiterdrehung der Welle abtastet und an den Rechner gibt, der den Motorantrieb abschaltet, wenn das Rad um ein Prüfsegment weitergedreht ist.

11. Vorrichtung nach Anspruch 10, **dadurch gekennzeichnet, daß** der Rechner einen Speicher aufweist, in dem eine Tabelle abgelegt ist, die Größen umfaßt, die für die Weiterdrehung eines Rades in Abhängigkeit von der Größe des Rades erforderlich sind.

12. Vorrichtung nach Anspruch 8, **dadurch gekennzeichnet, daß** die Positionierungseinrichtung einen X-Schlitten (50) zum Verfahren des Prüfkopfes (54) parallel zu der Achse der Welle (12) und einen Y-Schlitten (52) zum Verfahren des Prüfkopfes (54) senkrecht zu der Achse der Welle (12) aufweist, und daß die Schlitten und der Prüfkopf in einem Gehäuse der Wuchtmaschine integriert sind.

13. Vorrichtung nach Anspruch 12, **dadurch gekennzeichnet, daß** der X-Schlitten (50) und der Y-Schlitten (52) durch Motoren unter der Steuerung eines Rechners verfahrbar sind.

14. Vorrichtung nach Anspruch 8, **dadurch gekennzeichnet, daß** die Positionierungseinrichtung zwei Schwenkarme (18, 20) aufweist, die an der Wuchtmaschine vorgesehen sind.

15. Vorrichtung nach Anspruch 8, **dadurch gekennzeichnet, daß** die Positionierungseinrichtung eine Stütze (30) an dem Prüfkopf(16) aufweist.

16. Vorrichtung nach einem der Ansprüche 12 bis 15, **dadurch gekennzeichnet, daß** die Positionierungseinrichtung (18, 20) beziehungsweise die Stütze (30) arretierbar ist, wenn der Prüfkopf (16) die Prüfposition erreicht hat.

17. Vorrichtung nach Anspruch 8, **gekennzeichnet durch** eine AbstandsEinstellvorrichtung, um den Abstand zwischen dem Prüfkopf (16, 54) und dem Reifen einzustellen.

18. Vorrichtung nach Anspruch 17, **dadurch gekennzeichnet, daß** die Abstands-Einstellvorrichtung zwei schräggestellte Dioden (44, 46) an der Stirnseite des Prüfkopfes (16) aufweist, deren Strahlen sich unter dem Prüfabstand schneiden.

19. Vorrichtung nach Anspruch 17, **dadurch gekennzeichnet, daß** die Abstands-Einstellvorrichtung einen mechanischen Taster (60) an dem Prüfkopf (54) aufweist, der bei Erreichen des Prüfabstandes an dem Reifen angreift.

20. Vorrichtung nach Anspruch 17, **dadurch gekennzeichnet, daß** die Abstands-Einstellvorrichtung eine Ultraschall-Entfernungsmeßeinrichtung umfaßt.

21. Vorrichtung nach Anspruch 8, **gekennzeichnet durch** ein Ventil (42) das sowohl in Bezug auf die Größe seiner Öffnung als auch in Bezug auf seine Öffnungszeit steuerbar ist.

22. Vorrichtung nach Anspruch 21, **gekennzeichnet durch eine zentrale** Steuereinrichtung zum Steuern des Luftdruckes im Reifen, wobei der Reifendruck bei jedem Prüfschritt um eine Stufe herabzusetzen und nach abgeschlossener Prüfung wieder auf den Nenndruck zu bringen ist.

23. Vorrichtung nach Anspruch 8, **gekennzeichnet durch** eine zentrale Re cheneinrichtung zur Steuerung der Funktionen der Reifenprüfvorrichtung, wobei die Recheneinrichtung vorzugsweise mit der Recheneinrichtung der Wuchtmaschine integriert ist.

24. Vorrichtung nach einem der Ansprüche 8 bis 23, **gekennzeichnet durch** einen Monitor zur Anzeige der Meßergebnisse, der auch zur Anzeige der Infomationen bei dem Auswuchten des Rades dient.

## Claims

1. A tire testing method, wherein before and after an alteration in the tire pressure a respective interferogram is produced of the tire surface using coherent radiation and the interferogram is converted into a modulo 2π image, which for its part is processed to obtain a gray value image and in the case of which from a comparison of the gray value images information concerning any defects present in the tire is obtained, **characterized in that**
(a) for testing a tire the wheel, which bears such tire to be tested, is mounted on a motor-driven wheel balancing machine, that
(b) a test head arranged on the wheel balancing machine is moved toward the tire to be at a predetermined test distance therefrom for producing such interferograms,
(c) at a first test segment of the tire examination for defects is performed,
(d) the motor of the wheel balancing machine is driven to incrementally rotate the wheel by an amount equal to the size of a test segment and
(e) the steps (c) and (d) are repeated until the entire tire has been examined.

2. The method as claimed in claim 1, **characterized in that** the drive motor of the wheel balancing machine is operated by the computer via a controlled frequency converter.

3. The method as claimed in claim 2, **characterized in that** the further incremental rotation of the motor is sensed and a corresponding input signal fed to the computer.

4. The method as claimed in claim 3, **characterized in that** the size data, such as the tire size, for further incremental rotation of the wheel is communicated to the computer or is looked up from a table in the computer.

5. The method as claimed in claim 1, **characterized in that** the test head is moved in the X and Y directions in order to bring same into position for different sized tires.

6. The method as claimed in claim 1, **characterized in that** when moving said test head toward said tire the distance of the test head from the tire is monitored and a signal is produced when the test head has reached the test position and **in that** the test head is then arrested.

7. The method as claimed in claim 1, **characterized in that** the tire pressure is reduced for each test step and after testing has been completed it is returned to the nominal pressure.

8. A tire testing apparatus for the performance of the method as claimed in claim 1, comprising an air pressure means for altering the tire pressure, a test head and a computer, which before and after an alteration in the air pressure produce, using coherent radiation, a respective interferogram of the tire surface and convert the interferogram into a modulo 2π image, which on for its part is processed to yield a gray value image, and in which on the basis of a comparison of the gray value images information concerning any defects in the tire is obtained and the apparatus is **characterized by** a motor-driven wheel balancing machine (2) on which the wheel with the tire to be tested thereon may be mounted, by a positioning means (18, 20; 50 and 52) for the test head (16 and 54), with which the test head is to be moved up to a predetermined distance from the tire (1) for producing the interferograms, and by a control means for the motor of the wheel balancing machine (2) in order to incrementally rotate the wheel by an amount corresponding to a test segment, when the testing of the preceding test segment is concluded.

9. The apparatus as claimed in claim 8, **characterized in that** the motor of the wheel balancing machine (2) is operated by means of a frequency converter, which is adapted to be controlled by a computer.

10. The apparatus as claimed in claim 9, **characterized in that** a synchro is connected with the shaft of the wheel balancing machine, such synchro sensing incremental rotation of the shaft and supplying a corresponding signal to the computer, which switches off the motor drive, when the wheel has been rotated incrementally through one further test segment.

11. The apparatus as claimed in claim 10, **characterized in that** the computer comprises a memory, wherein a table is provided, which comprises size data, as is necessary for the incremental rotation of a wheel in a manner dependent on the size of the wheel.

12. The apparatus as claimed in claim 8, **characterized in that** the positioning means possesses an X slide (50) for shifting the test head (54) in parallelism the axis of the shaft (12) and a Y slide (52) for shifting the test head (54) perpendicularly to the axis of the shaft (12), and **in that** the slides and the test head are integrated in a housing of the wheel balancing machine.

13. The apparatus as claimed in claim 12, **characterized in that** the X slide (50) and the Y slide (52) are able to be shifted by motors under the control of a computer.

14. The apparatus as claimed in claim 8, **characterized in that** the positioning means comprises two pivot arms (18 and 20), which are provided on the wheel balancing machine.

15. The apparatus as claimed in claim 8, **characterized in that** the positioning means comprises a stay (30) on the test head (16).

16. The apparatus as claimed in any one of the claims 12 through 15, **characterized in that** the positioning means (18 and 20) or, respectively, the stay (30) may be arrested, when the test head (16) has reached the test position.

17. The apparatus as claimed in claim 8, **characterized by** a distance setting device for setting the distance between the test head (16 and 54) and the tire.

18. The apparatus as claimed in claim 17, **characterized in that** the distance setting device comprises two obliquely set diodes (44 and 46) on the end of the test head (16), the beams from such diodes intersecting at the test distance.

19. The apparatus as claimed in claim 17, **characterized in that** the distance setting device comprises a mechanical feeler (60) on the test head (54), which feeler on reaching the test distance contacts the tire.

20. The apparatus as claimed in claim 17, **characterized in that** the distance setting device comprises an ultrasonic range finding means.

21. The apparatus as claimed in claim 8, **characterized by** valve (42) which is able to be set both as regards the size of its opening and also as regards the time of opening.

22. The apparatus as claimed in claim 21, **characterized by** a central control means for the control of the air pressure in the tire, the pressure in the tire having to be reduced for every test step by one stage and having to be returned to the nominal pressure along conclusion of a test.

23. The apparatus as claimed in claim 8, **characterized by** a central computing means for control of the functions of the tire testing apparatus, the computing means preferably being integrated with the computing means of the wheel balancing machine.

24. The apparatus as claimed in any one of the claims 8 through 23, **characterized by** a monitor for display of the results of measurement, and which also serves for display of information during wheel balancing of the wheel.

## Revendications

1. Procédé de vérification de pneus dans lequel on génère au moyen d'un rayonnement cohérent un interférogramme de la surface de pneu, à chaque fois, avant et après un changement de la pression de pneu et dans lequel l'interférogramme est transformé dans une image modulo 2p qui pour sa part est transformée dans une image en niveaux de gris et dans lequel procédé on obtient en comparant des images en niveaux de gris les informations sur des défauts existants du pneu, **caractérisé en ce que**
a) pour vérifier un pneu , la roue comportant le pneu à vérifier est montée sur une machine à balancer, **en ce que**
b) pour enregistrer les interférogrammes sur les pneus, une tête de vérification disposée sur la machine à balancer est rapprochée du pneu jusqu'à une distance de vérification prédéterminée,
c) on effectue sur un premier segment de vérification du pneu une vérification des défauts, que
d) la machine à balancer continue de tourner la roue d'une valeur d'un segment de vérification, et **en ce que**
e) les étapes (c) et (d) sont répétées jusqu'à ce que le pneu soit vérifié.

2. Procédé selon la revendication 1, **caractérisé en ce que** le moteur d'entraînement de la machine à balancer est commandé par un calculateur à travers un convertisseur de fréquence.

3. Procédé selon la revendication 2, **caractérisé en ce qu'**on balaie de quel montant on a continué de tourner le moteur et introduit la valeur dans le calculateur.

4. Procédé selon la revendication 3, **caractérisé en ce que** les grandeurs nécessaires pour continuer de tourner la roue , par exemple, la taille du pneu, sont introduites dans le calculateur ou sont extraites d'un tableau dans le calculateur.

5. Procédé selon la revendication 1, **caractérisé en ce que** la tête de mesure est déplacée en direction X et Y pour l'emmener en position de vérification pour les différents pneus.

6. Procédé selon la revendication 1, **caractérisé en ce qu'**en rapprochant la tête de vérification on mesure la distance du pneu et on affiche le moment où la tête de vérification a atteint la position de vérification et que la tête de vérification est arrêtée.

7. Procédé selon la revendication 1, **caractérisé en ce que** la pression de pneu est réduite à chaque étape de vérification d'un intervalle et que la pression nominale est rétablie quand la vérification est terminée.

8. Dispositif pour vérifier la pression de pneu pour réaliser le procédé selon la revendication 1 avec un dispositif d'air comprimé pour modifier la pression de pneu ainsi qu'une tête de vérification et un calculateur qui génère à chaque fois un interférogramme de la surface de pneu au moyen d'un rayonnement cohérent à chaque fois avant et après un changement de la pression de pneu et dans lequel l'interférogramme est transformé dans une image modulo 2π qui pour sa part est transformée dans une image en niveaux de gris et dans lequel procédé on obtient en comparant des images en niveaux de gris les informations sur des défauts existants du pneu, **caractérisé par** une machine à balancer (2) sur laquelle on peut monter une roue comportant le pneu à vérifier, un dispositif de positionnement (18, 20 ; 50, 52) pour une tête de vérification (16, 54) avec lequel on doit rapprocher la tête de vérification jusqu'à une distance prédéterminée pour enregistrer les interférogrammes sur les pneus et **caractérisé par** un dispositif de commande pour la machine à balancer (2) afin de continuer à tourner la roue d'un montant d'un segment de vérification lorsque la vérification du segment précédent est terminée.

9. Dispositif selon la revendication 8, **caractérisé en ce que** le moteur de la machine à balancer (2) est actionné à travers un convertisseur de fréquence qui est susceptible d'être commandé par un calculateur.

10. Dispositif selon la revendication 9, **caractérisé en ce qu'**un capteur de rotation est connecté à l'arbre de la machine à balancer qui balaie de combien on a continué de tourner l'arbre et introduit la valeur dans le calculateur qui interrompt l'entraînement du moteur quand on a continué de tourner la roue d'un segment de vérification.

11. Dispositif selon la revendication 10, **caractérisé en ce que** le calculateur comporte une mémoire dans laquelle est stockée un tableau comportant des grandeurs nécessaires pour continuer de tourner une roue en fonction de la taille de la roue.

12. Dispositif selon la revendication 8, **caractérisé en ce que** le dispositif de positionnement comporte un chariot X (50) pour déplacer la tête de vérification (54) parallèle à l'axe de l'arbre (12) et un chariot Y pour déplacer la tête de vérification perpendiculaire par rapport à l'axe de l'arbre (12) et **en ce que** les chariots et la tête de vérification sont intégrés dans un boîtier de la machine à balancer.

13. Dispositif selon la revendication 12 , **caractérisé en ce que** le chariot X (50) et le chariot Y (52) peuvent être déplacés par des moteurs commandés par un calculateur.

14. Dispositif selon la revendication 8, **caractérisé en ce que** le dispositif de positionnement comporte deux bras pivotants (18, 20) prévus sur la machine à balancer.

15. Dispositif selon la revendication 8, **caractérisé en ce que** le dispositif de positionnement comporte un support (30) sur la tête de vérification (16).

16. Dispositif selon les revendications 12 à 15, **caractérisé en ce que** le dispositif de positionnement (18, 20) ou le support (30) peuvent être arrêtés quand la tête de vérification (16) a atteint la position de vérification.

17. Dispositif selon la revendication 8, **caractérisé par** un dispositif de réglage de distance destiné à régler la distance entre la tête de vérification (16, 54) et le pneu.

18. Dispositif selon la revendication 17, **caractérisé en ce que** le dispositif de réglage de distance comporte deux diodes inclinées (44, 46) sur le côté frontal de la tête de vérification (16) dont les rayons se coupent sous la distance de vérification.

19. Dispositif selon la revendication 17, **caractérisé en ce que** le dispositif de réglage de distance comporte un palpeur mécanique (60) sur la tête de vérification (54) qui touche le pneu quand la distance de vérification est atteinte.

20. Dispositif selon la revendication 17, **caractérisé en ce que** le dispositif de réglage de la distance comporte un dispositif de mesure de la distance ultrason .

21. Dispositif selon la revendication 8, **caractérisé par** une valve (42) qui peut être commandée en fonction de la taille de son ouverture et en fonction de son temps d'ouverture.

22. Dispositif selon la revendication 21, **caractérisé par** un dispositif de commande destiné à commander la pression d'air dans le pneu ; la pression de pneu étant réduite d'un intervalle à chaque étape de vérification et devant être remise à nouveau sur la pression nominale quand la vérification est terminée.

23. Dispositif selon la revendication 8, **caractérisé par** un dispositif central de calcul pour commander les fonctions du dispositif de vérification de pneu ; le dispositif de calcul étant intégré de préférence avec le dispositif de calcul de la machine à balancer.

24. Dispositif selon une des revendications 8 à 23, **caractérisé par** un moniteur pour afficher les résultats de mesure ; lequel moniteur servant également à afficher les informations au cours du balancement de la roue.
